# EUROPÄISCHE PATENTSCHRIFT

(11) **EP 0 614 479 B1**
(45) Veröffentlichungstag und Bekanntmachung des Hinweises auf die Patenterteilung: **02.11.1995**
(21) Anmeldenummer: 92923259.3
(22) Anmeldetag: 06.11.1992
(51) Int. Cl.: C09D 5/44

(54) **VERFAHREN ZUR VERHINDERUNG ODER REDUZIERUNG DER NACH DEM EINBRENNEN AUFTRETENDEN VERFÄRBUNG BEI LACKFILMEN**
PROCESS FOR PREVENTING OR REDUCING THE DISCOLORATION OF ENAMEL COATINGS AFTER STOVING
PROCEDE POUR EMPECHER OU REDUIRE LA DECOLORATION DE FILMS DE VERNIS APRES ETUVAGE

(30) Priorität: 28.11.1991 DE 4139126
(43) Veröffentlichungstag der Anmeldung: 14.09.1994
(73) Patentinhaber: BASF Lacke + Farben AG, 48165 Münster-Hiltrup (DE)
(72) Erfinder: FOBBE, Helmut, Dr., D-58638 Iserlohn (DE); BRÜCKEN, Thomas, Dr., D-48167 Münster (DE)
(86) Internationale Anmeldenummer: EP9202545
(87) Internationale Veröffentlichungsnummer: WO9311197

(56) Entgegenhaltungen:
- EP-A- 0 235 077
- DE-A- 2 324 019
- US-A- 4 576 980

## Beschreibung

Die Erfindung betrifft ein Verfahren zur Verhinderung oder Reduzierung der nach dem Einbrennen auftretenden Verfärbung bei Lackfilmen, die hergestellt worden sind durch kathodische Abscheidung von mit Übergangsmetallionen, insbesondere Eisenionen verunreinigten Elektrotauchlacken, die als Bindemittel
- A-1: mindestens ein aktive Wasserstoffatome aufweisendes, kationisches aminmodifiziertes Epoxidharz oder
- A-2: mindestens ein aktive Wasserstoffatome aufweisendes, kationisches Polyacrylatharz oder
- A-3: eine Mischung aus mindestens einem aktive Wasserstoffatome aufweisenden, kationischen aminmodifizierten Epoxidharz und mindestens einem aktive Wasserstoffatome aufweisenden, kationischen Polyacrylatharz und als Vernetzungsmittel
- B: mindestens ein aliphatisches oder cycloaliphatisches blockiertes Polyisocyanat, das Teil des aminmodifizierten Epoxidharzes oder Teil des kationischen Polyacrylatharzes ist oder als separate Komponente vorliegt oder sowohl Teil des aminmodifizierten Epoxidharzes bzw. kationischen Polyacrylatharzes ist als auch als separate Komponente vorliegt,
enthalten.

Die Erfindung betrifft auch wäßrige Elektrotauchlacke der oben genannten Art und die Verwendung von Estern aus der 3-(3,5-di-tert.butyl-4-hydroxyphenyl)propionsäure und Polyoalkoholen zur Verhinderung oder Reduzierung der nach dem Einbrennen auftretenden Verfärbung bei Lackfilmen, die hergestellt worden sind durch kathodische Abscheidung von Elektrotauchlacken der oben genannten Art.

Bei Lackfilmen, die hergestellt worden sind durch kathodische Abscheidung von Elektrotauchlacken, die als Bindemittel
- A-1: mindestens ein aktive Wasserstoffatome aufweisendes, kationisches aminmodifiziertes Epoxidharz oder
- A-2: mindestens ein aktive Wasserstoffatome aufweisendes, kationisches Polyacrylatharz oder
- A-3: eine Mischung aus mindestens einem aktive Wasserstoffatome aufweisenden, kationischen aminmodifizierten Epoxidharz und mindestens einem aktive Wasserstoffatome aufweisenden, kationischen Polyacrylatharz und als Vernetzungsmittel
- B: mindestens ein aliphatisches oder cycloaliphatisches blockiertes Polyisocyanat, das Teil des aminmodifizierten Epoxidharzes oder Teil des kationischen Polyacrylatharzes ist oder als separate Komponente vorliegt oder sowohl Teil des aminmodifizierten Epoxidharzes bzw. kationischen Polyacrylatharzes ist als auch als separate Komponente vorliegt

enthalten, treten nach dem Einbrennen im allgemeinen keine störenden Verfärbungen auf. Sobald die Elektrotauchlacke jedoch durch Übergangsmetallionen, insbesondere durch Eisenionen verunreinigt sind, treten nach dem Einbrennen der Lackfilme Verfärbungen auf, die bei hellfarbigen, insbesondere bei weißen Elektrotauchlacken besonders störend auffallen. Die Verunreinigung kann verschiedene Ursachen haben wie z. B. Korrosion der Elektrotauchlackieranlage, Einschleppen von Übergangsmetallionen aus der Phosphatierungszone und Abrieb von den bei der Herstellung der Pigmentpaste verwendeten Mahlaggregaten. Weiße Elektrotauchlacke werden beispielsweise zur Elektrotauchlackierung von Heizkörpern eingesetzt.

Eine Lösung des Problems durch Entfernung der die störenden Verfärbungen verursachenden Übergangsme tallionen aus den Elektrotauchlacken ist mit einem sehr hohen technischen Aufwand verbunden. Versuche, die Verfärbungen durch Änderungen im chemischen Auf bau des Elektrotauchlackbindemittels und/oder des Vernetzungsmittels zu verhindern, führten nicht zu einer befriedigenden Reduzierung der störenden Verfärbungen bzw. führten zu Oberflächenstörungen wie Kratern und zu Verschlechterungen bei anderen wichti gen Lackeigenschaften. Versuche, das Problem durch Zugabe von Additiven zu lösen, führten außer bei der Zugabe der erfindungsgemäß eingesetzten Additive zu ähnlichen Ergebnissen.

Die der vorliegenden Erfindung zugrundeliegende Aufgabenstellung besteht in der Bereitstellung eines technisch einfachen, die Lackfilmeigenschaften möglichst nicht negativ beeinflussenden Verfahrens zur Verhinderung oder Reduzierung der nach dem Einbrennen auftretenden Verfärbung bei Lackfilmen, die hergestellt worden sind durch kathodische Abscheidung von mit Übergangsmetallionen, insbesondere Eisenionen verunreinigten, wäßrigen Elektrotauchlacken, die als Bindemittel
- A-1: mindestens ein aktive Wasserstoffatome aufweisendes, kationisches aminmodifiziertes Epoxidharz oder
- A-2: mindestens ein aktive Wasserstoffatome aufweisendes, kationisches Polyacrylatharz oder
- A-3: eine Mischung aus mindestens einem aktive Wasserstoffatome aufweisenden, kationischen aminmodifizierten Epoxidharz und mindestens einem aktive Wasserstoffatome aufweisenden, kationischen Polyacrylatharz und als Vernetzungsmittel
- B: mindestens ein aliphatisches oder cycloaliphatisches blockiertes Polyisocyanat, das Teil des aminmodifizierten Epoxidharzes oder Teil des kationischen Polyacrylatharzes ist oder als separate Komponente vorliegt oder sowohl Teil des aminmodifizierten Epoxidharzes bzw. kationischen Polyacrylatharzes ist als auch als separate Komponente vorliegt
enthalten.

Diese Aufgabe wird überraschenderweise durch Einarbeitung von mindestens einem Ester aus der 3-(3,5-di-tert.butyl-4-hydroxyphenyl)propionsäure und einem Polyalkohol, vorzugsweise durch Einarbeitung von Pentaerythrityl-tetrakis[3-(3,5-di-tert.butyl-4-hydroxyphenyl)propionat] gelöst.

In der DE-PS-23 24 019 wird ein Verfahren zur kathodischen Abscheidung von Elektrotauchlacken, die die Komponenten A1 oder A2 und B enthalten können, auf chromplattierten Substraten beschrieben. Zur Verhinderung der nach dem Einbrennen auftretenden Vergilbung der abgeschiedenen Lackfilme wird empfohlen, die abgeschiedenen Lackfilme vor dem Einbrennen mit einem Nachbehandlungsmittel zu behandeln. Eine durch die Anwesenheit von Übergangsmetallionen, insbesondere Eisenionen verursachte Verfärbung der Lackfilme wird nicht erwähnt.

Zur Nachbehandlung können oberflächenaktive Verbindungen, Antioxidantien und organische Lösungsmittel verwendet werden. Diese Mittel können jeweils allein oder in Mischung in Verdünnung mit Wasser eingesetzt werden.

Eine Nachbehandlung der abgeschiedenen Lackfilme ist technisch sehr aufwendig. In Spalte 10 der DE-PS-23 24 019 wird in den letzten 4 Zeilen von einer Einarbeitung der Antioxidantien in den Elektrotauchlack abgeraten, weil dadurch die Einstellung und Handhabung des Elektrotauchlackbades erschwert wird.

Die Komponente A-1 ist dem Fachmann als Bindemittel für Elektrotauchlacke bekannt (vgl. z.B. US-PS-3,922,253, US-PS-4,031,050, US-PS-4,101,486, US-PS-4,017,438, DE-OS-27 01 002 und EP-B-4090) und ist beispielsweise herstellbar, indem gegebenenfalls modifizierte Polyepoxide (Komponente (a)) mit primären und/oder sekundären Aminen bzw. deren Salzen und/oder Salzen von tertiären Aminen (Komponente (b)) umgesetzt werden.

Unter Polyepoxiden werden Verbindungen verstanden, die zwei oder mehr Epoxidgruppen im Molekül enthalten.

Zur Herstellung der aktive Wasserstoffatome aufweisenden, kationischen aminmodifizierten Epoxidharze sind als Komponente (a) alle Verbindungen geeignet, die zwei oder mehr Epoxidgruppen im Molekül enthalten. Bevorzugt sind solche Verbindungen, die zwei Epoxidgruppen im Molekül enthalten und ein relativ niedriges Molekulargewicht von höchstens 750, bevorzugt 400 bis 500, haben.

Besonders bevorzugte (a)-Komponenten sind Verbindungen, die herstellbar sind durch Umsetzung von
(α) einer Diepoxidverbindung oder eines Gemisches von Diepoxidverbindungen mit einem Epoxidäquivalentgewicht unter 2000 mit
(β) einer unter den gegebenen Reaktionsbedingungen gegenüber Epoxidgruppen monofunktionell reagierenden, eine Phenol- oder Thiolgruppe enthaltenden Verbindung oder eines Gemisches solcher Verbindungen,

wobei die Komponenten (α) und (β) in einem Molverhältnis von 10 : 1 bis 1 : 1, bevorzugt 4 : 1 bis 1,5 : 1, eingesetzt werden und die Umsetzung der Komponente (α) mit der Komponente (β) bei 100 bis 190°C gegebenenfalls in Anwesenheit eines Katalysators durchgeführt wird (vgl. DE-OS-35 18 770).

Weitere besonders bevorzugte (a)-Komponenten sind Verbindungen, die herstellbar sind durch eine bei 100 bis 195°C, gegebenenfalls in Anwesenheit eines Katalysators durchgeführte, durch einen monofunktionell reagierenden Starter, der entweder eine alkoholische OH-Gruppe, eine phenolische OH-Gruppe oder eine SH-Gruppe trägt, initiierte Polyaddition einer Diepoxidverbindung und/oder eines Gemisches von Diepoxidverbindungen, gegebenenfalls zusammen mit mindestens einer Monoepoxidverbindung, zu einem Epoxidharz, in dem Diepoxidverbindung und Starter in einem Molverhältnis von größer 2 : 1 bis 10 : 1 eingebaut sind (vgl. DE-OS-35 18 732).

Polyepoxide, die zur Herstellung der besonders bevorzugten (a)-Komponenten und auch selbst als (a)-Komponenten einsetzbar sind, sind aus Polyphenolen und Epihalohydrinen hergestellte Polyglycidylether von Polyphenolen. Als Polyphenole können z.B. ganz besonders bevorzugt Bisphenol A und Bisphenol F eingesetzt werden. Außerdem sind auch 4,4'-Dihydroxybenzophenol, Bis-(4-hydroxyphenyl)-1,1-ethan, Bis-(4-hydroxyphenyl)-1,1-isobutan, Bis-(4-hydroxy-tertiär-butylphenyl)-2,2-propan, Bis-(2-hydroxynaphthyl)methan und 1,5-Dihydroxynaphthalin geeignet.
Weitere geeignete Polyepoxide sind Polyglycidylether von mehrwertigen Alkoholen, wie z.B. Ethylenglykol, Diethylenglykol, Triethylenglykol, 1,2-Propylenglykol, 1,4-Propylenglykol, 1,5-Pentandiol, 1,2,6-Hexantriol, Glycerin und Bis-(4-hydroxycyclohexyl-)2,2-propan.

Es können auch Polyglycidylester von Polycarbonsäuren, wie z.B. Oxalsäure, Bernsteinsäure, Glutarsäure, Terephthalsäure, 2,6-Naphthalindicarbonsäure, dimerisierte Linolsäure als Komponente (a) eingesetzt werden. Typische Beispiele sind Glycidyladipat und Glycidylphthalat.

Ferner sind als Komponente (a) auch Hydantoinepoxide, und Polyepoxidverbindungen geeignet, die man durch Epoxidierung einer olefinisch ungesättigten aliphatischen Verbindung erhält.

Unter modifizierten Polyepoxiden werden Polyepoxide verstanden, in denen ein Teil der reaktionsfähigen Gruppen mit einer modifizierenden Verbindungen umgesetzt worden ist.

Als Beispiele für modifizierende Verbindungen werden genannt:
a) Carboxylgruppenhaltige Verbindungen wie gesättigte oder ungesättigte Monocarbonsäuren (z.B. Benzoesäure, Leinölfettsäure, 2-Ethylhexansäure, Versaticsäure), aliphatische, cycloaliphatische und/oder aromatische Dicarbonsäuren verschiedener Kettenlänge (z.B. Adipinsäure, 2,2-Dimethylmalonsäure, Sebacinsäure, Hexahydrophthalsäure, Isophthalsäure oder dimere Fettsäuren), Hydroxialkylcarbonsäuren (z.B. Milchsäure, Dimethylolpropionsäure) sowie carboxylgruppenhaltige Polyester oder
b) aminogruppenhaltige Verbindungen, wie Diethylamin oder Ethylhexylamin oder Diamine mit sekundären Aminogruppen, z.B. N,N'-Dialkylalkylendiamine, wie Dimethylethylendiamin, N,N'-Dialkyl-polyoxialkylenamine, wie N,N'-Dimethylpolyoxipropylendiamin, cyanalkylierte Alkylendiamine, wie Bis-N,N'Cyanethylethylendiamin, cyanalkylierte Polyoxialkylenamine, wie Bis-N,N'-Cyanethylpolyoxipropylendiamin, Polyaminoamide, wie z.B. Versamide, insbesondere endständige Aminogruppen enthaltende Umsetzungsprodukte aus Diaminen (z.B. Hexamethylendiamin), Polycarbonsäuren, insbesondere Dimerfettsäuren und Monocarbonsäuren, insbesondere Fettsäuren oder das Umsetzungsprodukt von einem Mol Diaminohexan mit zwei Molen Monoglycidylether oder Monoglycidylester, speziell Glycidylester α-verzweigter Fettsäuren, wie der Versaticsäure, oder
c) hydroxylgruppenhaltige Verbindungen, wie Neopentylglykol, bisethoxiliertes Neopentylglykol, Hydroxipivalinsäureneopentylglykolester, Dimethylhydantoin-N,N'-diethanol, Hexandiol-1,6, Hexandiol-2,5, 1,4-Bis-(hydroximethyl)-cyclohexan, 1,1-Isopropyliden-bis-(p-phenoxi)-2-propanol, Trimethylolpropan, Pentaerythrit oder Aminoalkohole, wie Triethanolamin, Methyldiethanolamin oder hydroxylgruppennaltige Alkylketimine, wie Aminomethylpropandiol-1,3-methylisobutylketimin oder Tris-(hydroximethyl)-aminomethan-cyclohexanonketim in sowie auch Polyglykolether, Polyesterpolyole, Polyetherpolyole, Polycaprolactonpolyole, Polycaprolactampolyole verschiedener Funktionalität und Molekulargewichte oder
d) gesättigte oder ungesättigte Fettsäuremethylester, die in Gegenwart von Natriummethylat mit Hydroxylgruppen der Epoxidharze umgeestert werden.

Als Komponente (b) können primäre und/oder sekundäre Amine bzw. deren Salze und/oder Salze von tertiären Aminen verwendet werden, wobei die sekundären Amine besonders bevorzugte (b)-Komponenten sind.

Bevorzugt sollte das Amin eine in Wasser lösliche Verbindung sein. Beispiele solcher Amine sind Mono- und Dialkylamine, wie Methylamin, Ethylamin, Propylamin, Butylamin, Dimethylamin, Diethylamin, Dipropylamin, Methylbutylamin u. dgl. Geeignet sind ebenfalls Alkanolamine, wie z.B. Methylethanolamin, Diethanolamin u. dgl. Ferner sind Dialkylaminoalkylamine, wie z.B. Dimethylaminoethylamin, Diethylaminopropylamin, Dimethylaminopropylamin u. dgl. geeignet. In den meisten Fällen werden niedermolekulare Amine verwendet, doch ist es auch möglich, höhermolekulare Monoamine anzuwenden.

Polyamine mit primären und sekundären Aminogruppen können in Form ihrer Ketimine mit den Epoxidgruppen umgesetzt werden. Die Ketimine werden aus den Polyaminen und Ketonen in bekannter Weise hergestellt.

Die Amine können auch noch andere Gruppen enthalten, doch sollen diese die Umsetzung des Amins mit der Epoxidgruppe nicht stören und auch nicht zu einer Gelierung der Reaktionsmischung führen.

Die für die Wasserverdünnbarkeit und elektrische Abscheidung erforderlichen negative Ladungen können durch Protonierung mit wasserlöslichen Säuren (z.B. Borsäure, Ameisensäure, Milchsäure, bevorzugt Essigsäure) oder auch durch Umsetzung der Oxirangruppen mit Salzen eines Amins erzeugt werden.

Als Salz eines Amins kann das Salz eines tertiären Amins verwendet werden.

Der Aminanteil des Amin-Säuresalzes ist ein Amin, das unsubstituiert oder substituiert wie im Falle des Hydroxylamins sein kann, wobei diese Substituenten die Umsetzung des Amin-Säuresalzes mit dem Polyepoxid nicht stören sollen und die Reaktionsmischung nicht gelieren soll. Bevorzugte Amine sind tertiäre Amine, wie Dimethylethanolamin, Triethylamin, Trimethylamin, Triisopropylamin u. dgl. Beispiele von anderen geeigneten Aminen sind in der US-PS 38 39 252 in Spalte 5, Zeile 3, bis Spalte 7, Zeile 42, angegeben.

Auch die Komponente A-2 ist dem Fachmann als Bindemittel für Elektrotauchlacke bekannt. Sie sind beispielsweise herstellbar durch Copolymerisation von ethylenisch ungesättigten Monomeren, insbesondere (Meth)acrylaten mit copolymerisierbaren Monomeren, die eine primäre, sekundäre, tertiäre oder quaternäre Aminogruppe enthalten. Es können auch noch weitere aktive Wasserstoffatome aufweisenden Monomere, wie zum Beispiel Hydroxyalkyl(meth)acrylate mitverwendet werden. Die so hergestellten Polyacrylatharze können dann gegebenenfalls nach Protonierung mit einer Säure in Wasser dispergiert werden und zur Herstellung von Elektrotauchlacken verwendet werden.

Die Elektrotauchlacke enthalten neben den Komponenten A1 und A2 noch die Komponente B. Die Komponente B besteht aus mindestens einem aliphatischen oder cycloaliphatischen blockierten Polyisocyanat, das Teil des aminmodifizierten Epoxidharzes oder Teil des kationischen Polyacrylatharzes ist oder als separate Komponente vorliegt oder sowohl Teil des aminmodifizierten Epoxidharzes bzw. kationischen Polyacrylatharzes ist als auch als separate Komponente vorliegt.
Wenn das blockierte Polyisocyanat Teil des aminmodifizierten Epoxidharzes bzw. Teil des kationischen Polyacrylatharzes ist, dann liegt ein selbstvernetzendes aminmodifiziertes Epoxidharz bzw. ein selbstvernetzendes kationisches Polyacrylatharz vor. Wenn das blockierte Polyisocyanat als separate Komponente vorliegt, dann liegt ein fremdvernetzendes System vor. Elektrotauchlacke, in denen das blockierte Polyisocyanat als separate Komponente vorliegt, sind bevorzugt.

Als blockierte aliphatische und/oder cycloaliphatische Polyisocyanate werden aliphatische und/oder cycloaliphatische Polyisocyanate eingesetzt, deren Isocyanatgruppen durch Umsetzung mit einem Blockierungsmittel so blockiert worden sind, daß sie bei tieferen Temperaturen gegenüber Hydroxyl- und Aminogruppen nicht reaktiv sind, bei erhöhten Temperaturen jedoch deblockieren und mit dem Hydroxyl- und/oder Aminogruppen des aminmodifizierten Epoxidharzes bzw. mit den gegenüber NCO-Gruppen reaktiven Gruppen des kationischen Polyacrylatharzes reagieren.

Als Beispiele für einsetzbare aliphatische und/oder cycloaliphatische Polyisocyanate werden genannt: Hexamethylendiisocyanat, Isophorondiisocyanat, Cyclohexan-1,3- und 1,4-diisocyanat und Dicyclohexylmethan-2,4' und 4,4'-diisocyanat. Es können auch Carbodiimidgruppen und/oder Isocyanuratgruppen und/oder Biuretgruppen und/oder Urethangruppen und/oder Harnstoffgruppen aufweisende aliphatische oder cycloaliphatische Polyisocyanate eingesetzt werden. Urethangruppen aufweisende aliphatische oder cycloaliphatische Polyisocyanate können beispielsweise durch Umsetzung eines Teils der Isocyanatgruppen mit Polyolen, wie z.B. Trimethylolpropan, Glycerin, Polyesterpolyolen und Polyetherpolyolen erhalten werden. Als bevorzugtes Polyisocyanat wird trimerisiertes Hexamethylendiisocyanat eingesetzt. Es können auch Mischungen aus aliphatischen oder cycloaliphatischen Polyisocyanaten eingesetzt werden.

Für die Blockierung der Polyisocyanate können alle Blockierungsmittel eingesetzt werden, die einerseits verhindern, daß die Isocyanatgruppen vor Beginn des Einbrennvorgangs mit anderen Lackbestandteilen chemische Reaktionen eingehen und die andererseits die Isocyanatgruppen während des Einbrennvorgangs so schnell und vollständig freigeben, daß möglichst alle blockierten Isocyanatgruppen mit NCO-reaktiven Gruppen des aminmodifizierten Epoxidharzes bzw. kationischen Polyacrylatharzes reagieren können. Als Beispiele für geeignete Blockierungsmittel werden genannt:
Aliphatische Alkohole, wie Methyl-, Ethyl-, Chlorethyl-, Propyl-, Butyl-, Amyl-, Hexyl-, Heptyl-, Octyl-, Nonyl-, 3,3,5-Trimethylhexyl-, Decyl- und Laurylalkohol; cycloaliphatische Alkohole, wie Cyclopentanol und Cyclohexanol; aromatische Alkylalkohole, wie Phenylcarbinol und Methylphenylcarbinol; Hydroxylamine, wie Ethanolamin; Oxime, wie Methylethylketoxim, Acetonoxim und Cyclohexanonoxim und Amine, wie Dibutylamin und Diisopropylamin. Als bevorzugte Blockierungsmittel werden Amine, wie Dibutylamin und Diisopropylamin eingesetzt.

Selbstvernetzende aminmodifizierte Epoxidharze, bei denen das blockierte Polyisocyanat Teil des aminmodifizierten Epoxidharzes ist, können beispielsweise hergestellt werden, indem ein teilblockiertes Polyisocyanat, das im Mittel eine freie Isocyanatgruppe pro Molekül besitzt, mit dem aminmodifizierten Epoxidharz umgesetzt wird.

Selbstvernetzende kationische Polyacrylatharze, bei denen das blockierte Polyisocyanat Teil des kationischen Polyacrylatharzes ist, können beispielsweise hergestellt werden, indem ein teilblockiertes Polyisocyanat, das im Mittel eine freie Isocyanatgruppe pro Molekül besitzt, mit dem Polyacrylatharz umgesetzt wird.

Es ist erfindungswesentlich, daß die wäßrigen Elektrotauchlacke mindestens einen Ester aus der 3-(3,5-di-tert.butyl-4-hydroxyphenyl)-propionsäure und einem Polyalkohol enthalten. Unter Polyalkoholen werden Verbindungen mit mindestens 2 Hydroxylgruppen im Molekül verstanden. Als Beispiele für Polyalkohole werden genannt: Ethylenglykol, Propylenglykol, Glycerin, Butandiol, Butantriol, Pentandiol, Pentantriol, Pentaerythrit, Hexandiol, Hexantriol, Trimethylolpropan usw.. Die Herstellung derartiger Ester ist bekannt und wird beispielsweise in folgenden Patentdokumenten beschrieben: EP-A-66 189, EP-A-32 459, EP-A-148 729, EP-A-200 685 und EP-A-151 368. Es ist bevorzugt, Pentaerythrityl-tetrakis[3-(3,5-di-tert.butyl-4-hydroxyphenyl)propionat] in die wäßrigen Elektrotauchlacke einzuarbeiten. Pentaerythrityltetrakis[3-(3,5-di-tert.butyl-4-hydroxyphenyl)propionat] ist im Handel unter der Bezeichnung Irganox® 1010 (Hersteller: Ciba Geigy AG) erhältlich.

Die erfindungsgemäß eingesetzten Ester der 3-(3,5-di-tert.butyl-4-hydroxyphenyl)-propionsäure werden vorzugsweise in solchen Mengen in die Elektrotauchlacke eingearbeitet, daß die Elektrotauchlacke 150 bis 15000, besonders bevorzugt 300 bis 3000 ppm der eingesetzten Ester enthalten, wobei die ppm-Angaben auf die im Elektrotauchlack enthaltene Gesamtmenge an Bindemittel plus Vernetzungsmittel bezogen sind.

Die erfindungsgemäß eingesetzten Ester werden vorzugsweise in Form von Lösungen in organischen Lösemitteln, wie z.B. Ethylacetat oder Ethylenglykolmono-n-butylether in die Elektrotauchlacke eingearbeitet. Diese Lösungen können beispielsweise in die Bindemitteldispersion, in die Pigmentpaste oder in den fertig zubereiteten Elektrotauchlack eingearbeitet werden, wobei die Einarbeitung in den fertig zubereiteten Elektrotauchlack überraschenderweise die besten Ergebnisse liefert.

Die wäßrigen Elektrotauchlacke enthalten neben dem Bindemittel, Vernetzungsmittel und 3-(3,5-di-tert.butyl-4-hydroxyphenyl)-propionsäureester vorzugsweise noch mindestens ein weißes Pigment, insbesondere Titandioxid und gegebenenfalls Streckmittel, wie z.B. Bariumsulfat, Zinkoxid, basisches Bleicarbonat, basisches Bleisulfat, Aluminiumsilikat, Kaolin, Siliciumdioxid, Magnesiumsilikat usw. Der Pigmentgehalt der Elektrotauchlacke sollte vorzugsweise zwischen 20 und 40 Gew.-% liegen.

Die Erfindung wird in den folgenden Beispielen näher erläutert. Alle Angaben über Teile und Prozentsätze sind Gewichtsangaben, falls nicht ausdrücklich etwas anderes festgestellt wird.

### 1. Herstellung eines aktive Wasserstoffatome aufweisenden aminmodifizierten Epoxidharzes

In einem Reaktionsgefäß werden 1780 g Epikote 1001¹⁾, 280 g Dodecylphenol und 105 g Xylol vorgelegt und unter Stickstoffatmosphäre bei 120°C aufgeschmolzen. Anschließend werden unter leichtem Vakuum Wasserspuren durch Auskreisen entfernt. Dann gibt man 3 g N,N -Dimethylbenzylamin zu, erwärmt die Reaktionsmischung auf 180°C und hält diese Temperatur für ca. 3 h, bis das Epoxidäquivalentgewicht (EEW) auf 1162 angestiegen ist. Sodann kühlt man und gibt in rascher Abfolge 131 g Hexylglykol, 131 g Diethanolamin und 241 g Xylol zu. Dabei steigt die Temperatur leicht an. Danach läßt man das Reaktionsgemisch auf 90°C abkühlen und gibt zur weiteren Verdünnung 183 g Butylglykol und 293 g Isobutanol zu. Wenn die Temperatur auf 70°C gefallen ist, gibt man 41 g N,N-dimethylaminopropylamin zu, hält diese Temperatur für 3 h und trägt aus. Das Harz hat einen Festgehalt von 70,2 % und einen Basengehalt von 0,97 Milliäquivalenten/Gramm.
¹⁾ Epoxidharz der Fa. Shell mit einem Epoxidäquivalentgewicht von 500

### 2. Herstellung eines blockierten aliphatischen Polyisocyanats

In einem Reaktionsgefäß werden unter Stickstoffatmosphäre 488 g über Isocyanuratbildung trimerisiertes Hexamethylendiisocyanat²⁾ und 170 g Methylisobutylketon vorgelegt und auf 50°C erwärmt. Sodann läßt man 312 g Di-n-butylamin so zutropfen, daß die Innentemperatur bei 60 bis 70°C gehalten wird. Nach Ende der Zugabe wird noch 1 h bei 75°C gerührt und anschließend mit 30 g n-Butanol verdünnt und abgekühlt. Das Reaktionsprodukt hat einen Feststoffgehalt von 79,6 % (1 h bei 130°C) und eine Aminzahl von kleiner als 5 mg KOH/g.
²⁾ Handelsprodukt der BASF AG mit einem Isocyanatäquivalentgewicht von 193

### 3. Herstellung wäßriger Dispersionen, die ein aktive Wasserstoffatome aufweisendes, kationisches aminmodifiziertes Epoxidharz und ein blockiertes aliphatisches Polyisocyanat als separate Komponente enthalten

### 3.1 Dispersion ohne Zusatz von Pentaerythrityltetrakis[3-(3,5-di-tert.butyl-4-hydroxyphenyl)propionat]

1120 g der gemäß Punkt 1. hergestellten Harzlösung werden mit 420 g der gemäß Punkt 2. hergestellten Lösung des blockierten Polyisocyanats bei Raumtemperatur unter Rühren gemischt. Sobald die Mischung homogen ist (nach etwa 15 Minuten) werden 2,2 g einer 50 gewichtsprozentigen Lösung eines handelsüblichen Entschäumungsmittels (Syrfynol; Handelsprodukt der Air Chemicals) in Ethylenglykolmonobutylether und 18 g Eisessig eingerührt. Danach werden 678 g entionisiertes Wasser über 4 Portionen verteilt zugegeben. Anschließend wird mit weiteren 1154 g entionisiertem Wasser in kleinen Portionen verdünnt.

Die resultierende wäßrige Dispersion wird in einer Vakuumdestillation von niedrigsiedenden Lösemitteln befreit und anschließend mit entionisiertem Wasser auf einen Feststoffgehalt von 33 Gew.-% verdünnt.

### 3.2 Dispersion mit Zusatz von Pentaerythrityltetrakis[3-(3,5-di-tert.butyl-4-hydroxyphenyl)propionat]

1120 g der gemäß Punkt 1. hergestellten Harzlösung werden mit 420 g der gemäß Punkt 2. hergestellten Lösung des blockierten Polyisocyanats und 15,42 g einer 5 gewichtsprozentigen Lösung von Pentaerythrityltetrakis[3-(3,5-di-tert.butyl-4-hydroxyphenyl)propionat] in Ethylacetat bei Raumtemperatur unter Rühren gemischt und wie unter Punkt 3.1 beschrieben weiterverarbeitet.

### 4. Herstellung eines Reibharzes gemäß DE-OS-34 22 457

640 Teile eines Diglycidylethers auf Basis von Bisphenol A und Epichlorhydrin mit einem Epoxid-Äquivalentgewicht von 483 und 160 Teile eines solchen mit einem Epoxid-Äquivalentgewicht von 189 werden bei 100°C gemischt. In einem weiteren Gefäß werden 452 Teile Hexamethylendiamin vorgelegt, auf 100°C erhitzt und 720 Teile der oben beschriebenen heißen Epoxidharzmischung innerhalb von einer Stunde zugegeben, wobei leicht gekühlt werden muß, um die Temperatur bei 100°C zu halten. Nach weiteren 30 min wird unter Temperaturerhöhung und vermindertem Druck das überschüssige Hexamethylendiamin abgezogen, wobei zum Schluß eine Temperatur von 205°C und ein Druck von 30 mbar erreicht wird. Anschließend werden 57,6 Teile Stearinsäure, 172,7 Teile Dimerfettsäure und 115 Teile Xylol zugesetzt. Dann wird innerhalb von 90 min bei 175 bis 180°C das gebildete Wasser azeotrop abdestilliert. Anschließend werden 58 Teile Butylglykol und 322 Teile Isobutanol zugefügt. Das Produkt hat einen Feststoffgehalt von 70 Gew.-% und eine Viskosität, gemessen bei 75°C mit einem Platte-Kegel-Viskosimeter, von 2240 mPas.

### 5. Herstellung von Pigmentpasten

### 5.1 Herstellung einer Pigmentpaste ohne Zusatz von Pentaerythrityl-tetrakis[3-(3,5-di-tert.butyl-4-hydroxyphenyl)propionat]

586 Teile des gemäß Punkt 4. hergestellten Reibharzes werden mit 990 Teilen entionisiertem Wasser und 22 Teilen Eisessig intensiv vermischt. Anschließend wird mit 1129 Teilen TiO₂ und 146 Teilen eines Extenders auf Basis Aluminiumsilikat vermengt. Diese Mischung wird in einem Mahlaggregat auf eine Hegman-Feinheit von kleiner 12 µm zerkleinert. Danach wird entionisiertes Wasser zugegeben, bis ein Feststoffgehalt von 48 bis 52 Gew.-% (1/2 h, 180°C) erreicht worden ist.

### 5.2 Herstellung einer Pigmentpaste mit Zusatz von Pentaerythrityl-tetrakis[3-(3,5-di-tert.butyl-4-hydroxyphenyl)propionat]

586 Teile des gemäß Punkt 4. hergestellten Reibharzes werden mit 990 Teilen entionisiertem Wasser und 22 Teilen Eisessig intensiv vermischt. Dann werden 36 Teile einer 5-gewichtsprozentigen Lösung von Pentaerythrityl-tetrakis[3-(3,5-di-tert.butyl-4-hydroxyphenyl)propionat] in Ethylacetat unter starkem Rühren zugesetzt und wie unter Punkt 5.1 beschrieben weitergearbeitet.

### 6. Zubereitung der Elektrotauchlacke und Abscheidungen

### 6.1 Zubereitung eines Elektrotauchlackes, der kein Pentaerythrityl-tetrakis[3-(3,5-di-tert.butyl-4-hydroxyphenyl)propionat] enthält

2.200 Gewichtsteile der gemäß Punkt 3.1 hergestellten Dispersion werden mit 810 Gewichtsteilen der gemäß Punkt 5.1 hergestellten Pigmentpaste versetzt und mit entionisiertem Wasser auf 5.000 Gewichtsteile aufgefüllt.

### 6.2 Abscheidung eines Lackfilmes aus dem gemäß Punkt 6.1 hergestellten Elektrotauchlack

Auf einem als Kathode geschalteten zinkphosphatiertem Stahlblech wird bei ca. 350 V Gleichspannung innerhalb von etwa 2 Minuten bei einer Badtemperatur von 27°C ein Lackfilm abgeschieden, der nachdem er mit deionisiertem Wasser gründlich abgespült worden ist 20 Minuten lang bei 170°C eingebrannt wird. Der eingebrannte Lackfilm weist eine Trockenfilmdicke von 20 µm und einen Weißgrad nach Berger von 76 auf.

### 6.3 Verunreinigung des gemäß Punkt 6.1 hergestellten Elektrotauchlackes mit Eisenionen

Der gemäß Punkt 6.1 hergestellte Elektrotauchlack wird mit 1,5 g einer 10-gewichtsprozentigen wäßrigen Eisen(II)sulfatlösung versetzt und 24 Stunden lang gerührt.

### 6.4 Abscheidung eines Lackfilmes aus dem gemäß Punkt 6.3 hergestellten, mit Eisenionen verunreinigten Elektrotauchlack

Es wird wie unter Punkt 6.2 beschrieben verfahren. Der eingebrannte Lackfilm weist nur noch einen Weißgrad nach Berger von 48 auf.

### 6.5 Einarbeitung von Pentaerythrityl-tetrakis[3-(3,5-di-tert.butyl-4-hydroxyphenyl)propionat] in den gemäß Punkt 6.1 und Punkt 6.3 hergestellten, mit Eisenionen verunreinigten Elektrotauchlack

### 6.5.1 Einarbeitung von Pentaerythrityl-tetrakis[3-(3,5-di-tert.butyl-4-hydroxyphenyl)propionat] über die Bindemitteldispersion

Es wird wie unter Punkt 6.1 und Punkt 6.3 beschrieben verfahren mit der einzigen Ausnahme, daß anstelle der gemäß Punkt 3.1 hergestellten Dispersion die gemäß Punkt 3.2 hergestellte Dispersion eingesetzt wird.

### 6.5.2 Einarbeitung von Pentaerythrityl-tetrakis[3-(3,5-di-tert.butyl-4-hydroxyphenyl)propionat] über die Pigmentpaste

Es wird wie unter Punkt 6.1 und Punkt 6.3 beschrieben verfahren mit der einzigen Ausnahme, daß anstelle der gemäß Punkt 5.1 hergestellten Pigmentpaste die gemäß Punkt 5.2 hergestellte Pigmentpaste eingesetzt wird.

### 6.5.3 Einarbeitung von Pentaerythrityl-tetrakis[3-(3,5-di-tert.butyl-4-hydroxyphenyl)propionat] in den fertig zubereiteten Elektrotauchlack

Es wird gemäß Punkt 6.1 ein Elektrotauchlack zubereitet. Dieser fertig zubereitete Elektrotauchlack wird dann mit 10,0 g einer 5-gewichtsprozentigen Lösung von Pentaerythrityl-tetrakis[3-(3,5-di-tert.-butyl-4-hydroxyphenyl)propionat] in Ethylenglykolmono-n-butylether versetzt und 24 Stunden lang gerührt. Zur Verunreinigung mit Eisenionen wird der Elektrotauchlack zusätzlich noch mit 1,5 g einer 10-gewichtsprozentigen wäßrigen Eisen(II)sulfatlösung versetzt und 24 Stunden lang gerührt.

### 6.6 Abscheidung von Lackfilmen aus den gemäß Punkt 6.5.1, Punkt 6.5.2 und Punkt 6.5.3 hergestellten Elektrotauchlacken

Es wird wie unter Punkt 6.2 beschrieben verfahren. Der aus dem gemäß Punkt 6.5.1 hergestellten Elektrotauchlack abgeschiedene und eingebrannte Lackfilm weist einen Weißgrad nach Berger von 68 auf. Der aus dem gemäß Punkt 6.5.2 hergestellten Elektrotauchlack abgeschiedene und eingebrannte Lackfilm weist einen Weißgrad nach Berger von 56 auf. Der aus dem gemäß Punkt 6.5.3 hergestellten Elektrotauchlack abgeschiedene und eingebrannte Lackfilm weist einen Weißgrad nach Berger von 76 auf. Alle Lackfilme sind frei von Oberflächenstörungen und zeigen auch bei anderen wichtigen Lackeigenschaften, wie z.B. Umgriff, Verlauf und Korrosionsschutz ebenso gute Werte wie der gemäß Punkt 6.2 abgeschiedene und eingebrannte Lackfilm.

## Patentansprüche

1. Verfahren zur Verhinderung oder Reduzierung der nach dem Einbrennen auftretenden Verfärbung bei Lackfilmen, die hergestellt worden sind durch kathodische Abscheidung von mit Übergangsmetallionen, insbesondere Eisenionen verunreinigten, wäßrigen Elektrotauchlacken, die als Bindemittel
A-1 mindestens ein aktive Wasserstoffatome aufweisendes, kationisches aminmodifiziertes Epoxidharz oder
A-2 mindestens ein aktive Wasserstoffatome aufweisendes, kationisches Polyacrylatharz oder
A-3 eine Mischung aus mindestens einem aktive Wasserstoffatome aufweisenden, kationischen aminmodifizierten Epoxidharz und mindestens einem aktive Wasserstoffatome aufweisenden, kationischen Polyacrylatharz und als Vernetzungsmittel
B mindestens ein aliphatisches oder cycloaliphatisches blockiertes Polyisocyanat, das Teil des aminmodifizierten Epoxidharzes oder Teil des kationischen Polyacrylatharzes ist oder als separate Komponente vorliegt oder sowohl Teil des aminmodifizierten Epoxidharzes bzw. kationischen Polyacrylatharzes ist als auch als separate Komponente vorliegt
enthalten, dadurch gekennzeichnet, daß mindestens ein Ester aus der 3-(3,5-di-tert.butyl-4-hydroxyphenyl)propionsäure und einem Polyalkohol in die Elektrotauchlacke eingearbeitet wird.

2. Verfahren nach Anspruch 1, dadurch gekennzeichnet, daß Pentaerythrityl-tetrakis[3-(3,5-di-tert.butyl-4-hydroxyphenyl)propionat] in die Elektrotauchlacke eingearbeitet wird.

3. Mit Übergangsmetallionen, insbesondere Eisenionen verunreinigte Elektrotauchlacke, die als Bindemittel
A-1 mindestens ein aktive Wasserstoffatome aufweisendes, kationisches aminmodifiziertes Epoxidharz oder
A-2 mindestens ein aktive Wasserstoffatome aufweisendes, kationisches Polyacrylatharz oder
A-3 eine Mischung aus mindestens einem aktive Wasserstoffatome aufweisenden, kationischen aminmodifizierten Epoxidharz und mindestens einem aktive Wasserstoffatome aufweisenden, kationischen Polyacrylatharz und als Vernetzungsmittel
B mindestens ein aliphatisches oder cycloaliphatisches blockiertes Polyisocyanat, das Teil des aminmodifizierten Epoxidharzes oder Teil des kationischen Polyacrylatharzes ist oder als separate Komponente vorliegt oder sowohl Teil des aminmodifizierten Epoxidharzes bzw. kationischen Polyacrylatharzes ist als auch als separate Komponente vorliegt
enthalten, dadurch gekennzeichnet, daß sie mindestens einen Ester aus der 3-(3,5-di-tert.butyl-4-hydroxyphenyl)propionsäure und einem Polyalkohol enthalten.

4. Elektrotauchlacke nach Anspruch 3, dadurch gekennzeichnet, daß sie Pentaerythrityl-tetrakis[3-(3,5-di-tert.butyl-4-hydroxyphenyl)propionat] enthalten.

5. Verwendung von Estern aus der 3-(3,5-di-tert.butyl-4-hydroxyphenyl)propionsäure und Polyalkoholen zur Verhinderung oder Reduzierung der nach dem Einbrennen auftretenden Verfärbung bei Lackfilmen, die hergestellt worden sind durch kathodische Abscheidung von mit Übergangsmetallionen, insbesondere Eisenionen verunreinigten wäßrigen Elektrotauchlacken, die als Bindemittel
A-1 mindestens ein aktive Wasserstoffatome aufweisendes, kationisches aminmodifiziertes Epoxidharz oder
A-2 mindestens ein aktive Wasserstoffatome aufweisendes, kationisches Polyacrylatharz oder
A-3 eine Mischung aus mindestens einem aktive Wasserstoffatome aufweisenden, kationischen aminmodifizierten Epoxidharz und mindestens einem aktive Wasserstoffatome aufweisenden, kationischen Polyacrylatharz und als Vernetzungsmittel
B mindestens ein aliphatisches oder cycloaliphatisches blockiertes Polyisocyanat, das Teil des aminmodifizierten Epoxidharzes oder Teil des kationischen Polyacrylatharzes ist oder als separate Komponente vorliegt oder sowohl Teil des aminmodifizierten Epoxidharzes bzw. kationischen Polyacrylatharzes ist als auch als separate Komponente vorliegt
enthalten.

6. Verwendung nach Anspruch 5, dadurch gekennzeichnet, daß Pentaerythrityl-tetrakis[3-(3,5-di-tert.butyl-4-hydroxyphenyl)propionat] eingesetzt wird.

## Claims

1. Method of preventing or reducing the discoloration of coating films which occurs after stoving when these films have been prepared by cathodic deposition of aqueous electrodeposition coating materials which are contaminated with transition metal ions, especially iron ions, and which contain as binder
A-1 at least one cationic, amine-modified epoxy resin which contains active hydrogen atoms, or
A-2 at least one cationic polyacrylate resin which contains active hydrogen atoms, or
A-3 a mixture of at least one cationic, amine-modified epoxy resin which contains active hydrogen atoms and at least one cationic polyacrylate resin which contains active hydrogen atoms, and as crosslinking agent
B at least one aliphatic or cycloaliphatic blocked polyisocyanate which is part of the amine-modified epoxy resin or part of the cationic polyacrylate resin or is present as a separate component or is both part of the amine-modified epoxy resin and/or cationic polyacrylate resin and is present as a separate component,
characterized in that at least one ester of 3-(3,5-di-tert-butyl-4-hydroxyphenyl)propionic acid and a polyalcohol is incorporated into the electrodeposition coating materials.

2. Method according to Claim 1, characterized in that pentaerythrityl tetrakis[3-(3,5-di-tert-butyl-4-hydroxyphenyl)propionate] is incorporated into the electrodeposition coating materials.

3. Electrodeposition coating materials which are contaminated with transition metal ions, especially iron ions, and which contain as binder
A-1 at least one cationic, amine-modified epoxy resin which contains active hydrogen atoms, or
A-2 at least one cationic polyacrylate resin which contains active hydrogen atoms, or
A-3 a mixture of at least one cationic, amine-modified epoxy resin which contains active hydrogen atoms and at least one cationic polyacrylate resin which contains active hydrogen atoms, and as crosslinking agent
B at least one aliphatic or cycloaliphatic blocked polyisocyanate which is part of the amine-modified epoxy resin or part of the cationic polyacrylate resin or is present as a separate component or is both part of the amine-modified epoxy resin and/or cationic polyacrylate resin and is present as a separate component,
characterized in that they contain at least one ester of 3-(3,5-di-tert-butyl-4-hydroxyphenyl)propionic acid and a polyalcohol.

4. Electrodeposition coating materials according to Claim 3, characterized in that they contain pentaerythrityl tetrakis[3-(3,5-di-tert-butyl-4-hydroxyphenyl)propionate].

5. Use of esters of 3-(3,5-di-tert-butyl-4-hydroxyphenyl)propionic acid and polyalcohols for preventing or reducing the discoloration of coating films which occurs after stoving, when the films have been prepared by cathodic deposition of aqueous electrodeposition coating materials which are contaminated with transition metal ions, especially iron ions, and which contain as binder
A-1 at least one cationic, amine-modified epoxy resin which contains active hydrogen atoms, or
A-2 at least one cationic polyacrylate resin which contains active hydrogen atoms, or
A-3 a mixture of at least one cationic, amine-modified epoxy resin which contains active hydrogen atoms and at least one cationic polyacrylate resin which contains active hydrogen atoms, and as crosslinking agent
B at least one aliphatic or cycloaliphatic blocked polyisocyanate which is part of the amine-modified epoxy resin or part of the cationic polyacrylate resin or is present as a separate component or is both part of the amine-modified epoxy resin and/or cationic polyacrylate resin and is present as a separate component.

6. Use according to Claim 5, characterized in that pentaerythrityl tetrakis[3-(3,5-di-tert-butyl-4-hydroxyphenyl)propionate] is employed.

## Revendications

1. Procédé pour empêcher ou réduire la décoloration se présentant après la cuisson sur des pellicules de vernis, qui ont été préparées par électrodéposition cathodique de vernis aqueux pour trempage électrophorétique, contaminés à l'aide d'ions de métaux de transition, en particulier d'ions de fer, qui contiennent en tant que liant
A-1 au moins une résine époxyde cationique modifiée aux amines, présentant des atomes d'hydrogène actifs ou
A-2 au moins une résine de polyacrylate cationique, présentant des atomes d'hydrogène actifs ou
A-3 un mélange d'au moins une résine époxyde cationique, modifiée aux amines, présentant des atomes d'hydrogène actifs et d'au moins une résine de polyacrylate cationique, présentant des atomes d'hydrogène actifs et en tant qu'agent de réticulation
B au moins un polyisocyanate bloqué aliphatique ou cycloaliphatique, qui fait partie de la résine époxyde modifiée aux amines ou fait partie de la résine de polyacrylate cationique ou qui est présent en tant que composant séparé ou non seulement fait partie de la résine époxyde modifiée aux amines, respectivement de la résine de polyacrylate cationique, mais est aussi présent en tant que composant séparé,
caractérisé en ce que l'on incorpore dans les vernis pour trempage électrophorétique au moins un ester obtenu à partir de l'acide 3-(3,5-di-tert.-butyl-4-hydroxyphényl)propionique et à partir d'un polyalcool.

2. Procédé selon la revendication 1, caractérisé en ce que l'on incorpore dans les vernis pour trempage électrophorétique du tétrakis-[3-(3,5-di-tert.-butyl-4-hydroxyphényl)propionate] de pentaérythrityle.

3. Vernis pour trempage électrophorétique contaminés à l'aide d'ions de métaux de transition, en particulier d'ions de fer, qui contiennent en tant que liant
A-1 au moins une résine époxyde cationique modifiée aux amines, présentant des atomes d'hydrogène actifs ou
A-2 au moins une résine de polyacrylate cationique, présentant des atomes d'hydrogène actifs ou
A-3 un mélange d'au moins une résine époxyde cationique, modifiée aux amines, présentant des atomes d'hydrogène actifs et d'au moins une résine de polyacrylate cationique, présentant des atomes d'hydrogène actifs et en tant qu'agent de réticulation
B au moins un polyisocyanate bloqué aliphatique ou cycloaliphatique, qui fait partie de la résine époxyde modifiée aux amines ou fait partie de la résine de polyacrylate cationique ou qui est présent en tant que composant séparé ou non seulement fait partie de la résine époxyde modifiée aux amines, respectivement de la résine de polyacrylate cationique, mais est aussi présent en tant que composant séparé,
caractérisés en ce que qu'ils contiennent au moins un ester obtenu à partir de l'acide 3-(3,5-di-tert.-butyl-4-hydroxyphényl)propionique et à partir d'un polyalcool .

4. Vernis pour trempage électrophorétique selon la revendication 3, caractérisés en ce qu'ils contiennent du tétrakis-[3-(3,5-di-tert.-butyl-4-hydroxyphényl)propionate] de pentaérythrityle.

5. Utilisation des esters obtenus à partir de l'acide 3-(3,5-di-tert.-butyl-4-hydroxyphényl)propionique et de polyalcools pour empêcher ou réduire la décoloration se présentant après la cuisson sur des pellicules de vernis, qui ont été préparées par électrodéposition cathodique de vernis aqueux pour trempage électrophorétique contaminés à l'aide d'ions de métaux de transition, en particulier d'ions de fer, qui contiennent en tant que liant
A-1 au moins une résine époxyde cationique modifiée aux amines, présentant des atomes d'hydrogène actifs ou
A-2 au moins une résine de polyacrylate cationique, présentant des atomes d'hydrogène actifs ou
A-3 un mélange d'au moins une résine époxyde cationique, modifiée aux amines, présentant des atomes d'hydrogène actifs et d'au moins une résine de polyacrylate cationique, présentant des atomes d'hydrogène actifs et en tant qu'agent de réticulation
B au moins un polyisocyanate bloqué aliphatique ou cycloaliphatique, qui fait partie de la résine époxyde modifiée aux amines ou fait partie de la résine de polyacrylate cationique ou qui est présent en tant que composant séparé ou non seulement fait partie de la résine époxyde modifiée aux amines, respectivement de la résine de polyacrylate cationique, mais est aussi présent en tant que composant séparé.

6. Utilisation selon la revendication 5, caractérisée en ce que l'on utilise du tétrakis-[3-(3,5-di-tert.-butyl-4-hydroxyphényl)propionate] de pentaérythrityle.
